# FASCICULE DE BREVET EUROPEEN

(11) **EP 3 449 134 B1**
(45) Date de publication et mention de la délivrance du brevet: **15.04.2020**
(21) Numéro de dépôt: 17725663.3
(22) Date de dépôt: 25.04.2017
(51) Int. Cl.: F04F 5/46, F02C 7/236, F04F 5/10

(54) **POMPE A JET POUR TURBOMACHINE, COMPRENANT UN AUBAGE POUR MISE EN ROTATION DE FLUIDE ACTIF**
STRAHLPUMPE FÜR EINE TURBOMASCHINE MIT BESCHAUFELUNG ZUR ROTATION EINER AKTIVEN FLÜSSIGKEIT
JET PUMP FOR A TURBOMACHINE, COMPRISING BLADING FOR IMPARTING ROTATION TO ACTIVE FLUID

(30) Priorité: 27.04.2016 FR 1653747
(43) Date de publication de la demande: 06.03.2019
(73) Titulaire: Safran Aircraft Engines, 75015 Paris (FR)
(72) Inventeur: VERTENOEUIL, Philippe, 77550 Moissy-Crayamel (FR)
(74) Mandataire: Brevalex
(86) Numéro de dépôt international: PCT/FR2017/050978
(87) Numéro de publication internationale: WO 2017/187082

(56) Documents cités:
- WO-A1-2011/135240
- WO-A2-83/04232
- WO-A2-2013/002872
- DE-A1- 3 732 415
- FR-A1- 2 646 213
- GB-A- 575 024
- US-A1- 2015 285 271

## Description

### DOMAINE TECHNIQUE

L'invention se rapporte aux turbomachines d'aéronef telles que les turboréacteurs et les turbopropulseurs. Plus précisément, elle concerne des systèmes d'alimentation en fluide pour turbomachine, notamment en carburant.

### ÉTAT DE LA TECHNIQUE ANTÉRIEURE

Certains systèmes d'alimentation en fluide pour turbomachine, tel que celui qui est divulgué dans la demande internationale WO 2011/135240 déposée par la société Snecma, comprennent une pompe à jet.

Une pompe à jet comprend un conduit d'entrée de fluide actif, un conduit de fluide passif séparé du conduit d'entrée de fluide actif par une paroi, un mélangeur dans lequel le fluide actif et le fluide passif se mélangent pour entraîner le fluide passif, ainsi qu'un diffuseur destiné à homogénéiser la vitesse du mélange de fluide en sortie de la pompe.

Les pompes à jet présentent l'avantage de ne contenir aucune pièce mobile ce qui les rend plus fiables et tend à diminuer leur masse.

Néanmoins, le rendement des pompes à jet dans des systèmes d'alimentation nécessite encore d'être amélioré. Il existe également un besoin pour rendre le rendement moins dépendant de la température et du point de fonctionnement de la pompe à jet.

FR 2 646 213 et WO 83/04232 divulguent chacun une pompe à jet de structure connue.

### EXPOSÉ DE L'INVENTION

L'invention vise à résoudre au moins partiellement les problèmes rencontrés dans les solutions de l'art antérieur.

À cet égard, l'invention a pour objet une pompe à jet pour système d'alimentation en fluide de turbomachine.

La pompe à jet comprend un conduit d'entrée de fluide actif comprenant un tube qui délimite le conduit d'entrée de fluide actif, et un conduit d'entrée de fluide passif séparé fluidiquement du conduit d'entrée de fluide actif par le tube.

Selon l'invention, le conduit d'entrée de fluide actif comprend au moins deux aubes vrillées situées à l'intérieur du tube et configurées pour entrainer le fluide actif en rotation par rapport à l'axe longitudinal du tube, chacune des aubes comprenant un élément de paroi qui comporte un bord latéral interne et un bord latéral externe opposé au bord latéral interne, les aubes étant reliées entre elles au niveau de leur bord latéral interne qui est sensiblement parallèle à l'axe longitudinal du tube et qui s'étend au centre du tube intérieur.

Les aubes d'une pompe selon l'invention sont ainsi configurées pour entrainer le fluide actif en rotation par rapport à l'axe du tube, avant son mélange avec le fluide passif, ce qui favorise le mélange du fluide actif et du fluide passif.

Grâce à la rotation du fluide actif, la vorticité et la turbulence globale dans la zone de mélange du fluide actif et passif est accrue. Le rendement de la pompe à jet est augmenté, et la variation de rendement de la pompe à jet en fonction de la température est réduite.

Le fluide actif est par exemple de l'air, de l'huile ou du carburant. Par ailleurs, le fluide actif a de préférence la même composition que le fluide passif.

L'invention peut comporter de manière facultative une ou plusieurs des caractéristiques suivantes combinées entre elles ou non.

Avantageusement, au moins une partie du bord de fuite d'au moins une des aubes comprend une surface extérieure sensiblement plane, de préférence sensiblement orthogonale à l'axe du tube. Cette partie sensiblement plane favorise la création de turbulences dans le fluide.

Avantageusement, au moins une portion interne de bord de fuite d'au moins une des aubes comprend une portion de type NACA. Ce profil est utile à la diminution de pertes dans le fluide par frottements et recirculations de fluide au niveau du bord de fuite de l'aube.

Selon une particularité de réalisation, au moins une partie du bord d'attaque d'au moins une des aubes comporte de type profil NACA, pour réduire les pertes par frottements et recirculations de fluide au niveau du bord d'attaque de l'aube.

Selon une particularité de réalisation, le bord d'attaque d'au moins une des aubes est incliné d'un angle d'attaque compris entre 5° et 30° par rapport à une section transversale du tube au niveau de l'entrée du tube.

Selon une particularité de réalisation, l'aube s'étend, selon la direction de l'axe du tube, sur une longueur supérieure à la majorité de la longueur du conduit d'entrée de fluide actif.

De préférence, l'aube s'étend, selon la direction de l'axe longitudinal du tube, sur une longueur supérieure à aux deux tiers de la longueur du conduit d'entrée de fluide actif.

De préférence, l'aube s'étend, selon la direction de l'axe du tube, sur une longueur sensiblement égale à la longueur du conduit d'entrée de fluide actif.

Selon une forme de réalisation avantageuse, la pompe à jet comprend au moins trois aubes, agencées autour de l'axe du tube et situées chacune à l'intérieur du tube, chaque aube étant configurée pour entrainer le fluide actif en rotation par rapport à l'axe du tube.

Selon une autre forme de réalisation avantageuse, les aubes sont toutes vrillées dans un même sens.

Selon une particularité de réalisation, chaque aube est vrillée selon un angle de vrillage entre les extrémités opposées de l'aube selon la direction de l'axe du tube, la somme des angles de vrillage étant égale à 360°. Autrement dit, l'ensemble formé par les aubes parcourt toute la longueur circonférentielle du tube entre les deux extrémités opposées de l'aube selon la direction de l'axe du tube.

L'invention porte également sur un système d'alimentation en fluide pour turbomachine. Le système d'alimentation comprend une pompe à jet telle que définie ci-dessus, une pompe volumétrique haute pression configurée pour être alimentée en fluide par la pompe à jet, un doseur de fluide, et une boucle de retour de fluide.

La pompe volumétrique est située entre la pompe à jet et le doseur. La boucle de retour de fluide a une entrée située en aval de la pompe haute pression et une sortie configurée pour alimenter en fluide le conduit d'entrée de fluide actif de la pompe à jet. Le doseur de fluide est configuré pour réguler un débit de fluide dans la boucle de retour.

Selon une forme de réalisation avantageuse, le système d'alimentation comprend un échangeur de chaleur et/ou un filtre, en aval de la pompe à jet et entre la pompe à jet et le doseur.

Selon une particularité de réalisation, le système d'alimentation comprend une pompe centrifuge basse pression en amont de la pompe à Jet, pour alimenter en fluide le conduit d'entrée de fluide passif de la pompe à jet.

L'invention se rapporte aussi à une turbomachine comprenant un système d'alimentation en fluide tel que défini ci-dessus.

Selon une autre forme de réalisation avantageuse, la turbomachine comprend un réducteur différentiel configuré pour entrainer en rotation au moins une hélice et destiné à être alimenté en lubrifiant par le système d'alimentation tel que défini ci-dessus. La turbomachine est par exemple une turbomachine à ensemble d'hélices contrarotatives non carénées, également connue sous le nom d'« Open Rotor ».

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une représentation schématique partielle d'un système d'alimentation en fluide de turbomachine, selon un premier mode de réalisation de l'invention ;
- la figure 2 est une représentation schématique partielle en coupe longitudinale d'une pompe à jet du système d'alimentation selon le premier mode de réalisation;
- la figure 3 est une représentation en vue de côté du conduit de fluide actif de la pompe à jet du système d'alimentation ;
- la figure 4 est une représentation schématique en vue de face de la sortie du conduit de fluide actif de la pompe à jet ;
- la figure 5 est une représentation schématique partielle en élévation d'un dispositif de mise en rotation de fluide du conduit de fluide actif;
- la figure 6 est une représentation schématique partielle en élévation du dispositif de mise en rotation lors d'un écoulement de fluide actif;
- la figure 7 est une représentation plane des profils de vitesse de fluide actif à l'entrée et à la sortie du conduit de fluide actif.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

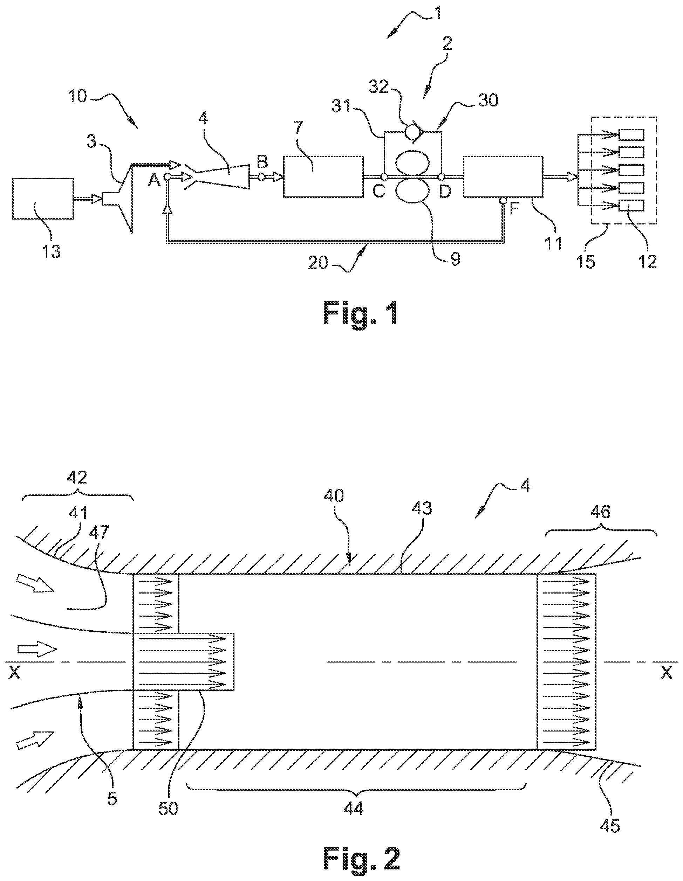

La figure 1 représente un système d'alimentation 2 en fluide pour turbomachine 1 d'aéronef. Dans le mode de réalisation décrit, le fluide est du carburant.

Le système d'alimentation 2 comprend une branche principale 10, une boucle de recirculation de carburant 20 et une boucle de retour de carburant 30.

La branche principale 10 comprend, d'amont en aval, une pompe centrifuge basse pression 3, une pompe à jet 4, une résistance hydraulique 7, une pompe volumétrique haute pression 9, un doseur de fluide 11 et des Injecteurs 12 de carburant.

Les termes « amont » et « aval » sont définis en référence à la direction générale d'écoulement du carburant dans le système d'alimentation 2 depuis un réservoir 13 en direction des injecteurs 12.

La pompe centrifuge 3 augmente la pression du carburant s'écoulant depuis un réservoir 13 de carburant en direction de la pompe à jet 4. Elle alimente le conduit 47 d'entrée de fluide passif de la pompe à jet 4.

La pompe à jet sera décrite plus en détail en référence aux figures 2 à 5. La pompe à jet 4 ne contient aucune pièce mobile ce qui la rend plus fiable et tend à diminuer sa masse par rapport à d'autres types de pompes.

La pompe centrifuge 3 et la pompe à jet 4 sont destinées à augmenter la pression du carburant qui s'écoule en direction de la pompe volumétrique 9, de manière à limiter/empêcher les risques de cavitation à l'Intérieur de la pompe volumétrique 9.

La résistance hydraulique 7 comprend un échangeur, un filtre à carburant, une vanne de coupure et /ou un débitmètre. Le terme « résistance hydraulique » sert à définir dans ce document, par analogie avec le domaine de l'électricité, la grandeur issue du rapport entre la différence de pression de fluide entre l'entrée et la sortie d'un élément du système d'alimentation sur le débit de fluide traversant l'élément. Par métonymie et toujours par analogie avec le domaine de l'électricité, le terme « résistance hydraulique » sert également à désigner un élément du système d'alimentation caractérisé par cette grandeur.

La pompe volumétrique 9 délivre un débit de carburant constant en fonction du régime de rotation moteur. Dans le mode de réalisation décrit, la pompe haute pression 9 est une pompe volumétrique à engrenages entrainée mécaniquement en rotation par une boite de transmission de turbomachine 1.

Le doseur de carburant 11 est configuré pour réguler le débit de carburant qui s'écoule en direction des injecteurs 12 et celui qui s'écoule dans la boucle de retour 20 vers l'amont de la pompe volumétrique 9.

Les injecteurs de carburant 12 sont conçus pour injecter du carburant sous pression dans une chambre de combustion 15 de la turbomachine 1.

La boucle de recirculation 30 est en dérivation de la pompe volumétrique 9. Elle est raccordée à la branche principale 10 à un nœud D situé entre la pompe volumétrique 9 et le doseur 11 et un noeud C qui est situé entre la résistance hydraulique 7 et la pompe volumétrique 9. La boucle de recirculation 30 comprend une conduite 31 et un clapet anti-retour 32. Elle est configurée pour faire circuler un excès de carburant en aval de la pompe volumétrique 9 depuis le nœud D jusqu'au nœud C.

La boucle de retour 20 forme une boucle avec la branche principale 10 à laquelle elle est raccordée à un nœud F et à un nœud A. Le nœud d'entrée F de la boucle de retour 20 est situé entre la pompe volumétrique 9 et les injecteurs 12. Le nœud de sortie A de la boucle de retour 20 est situé entre la pompe centrifuge 13 et la sortie de la pompe à jet 4. Le nœud A est destiné à alimenter en carburant un conduit d'entrée de fluide actif 5 de la pompe à jet 4. La boucle de retour 20 sert alors à la fois à faire circuler un excès de carburant en aval de la pompe volumétrique 9 depuis le nœud F jusqu'au nœud A, et à faire fonctionner la pompe à jet 4.

La pompe à jet 4 est décrite en référence aux figures 2 à 4. La pompe à jet 4 comprend une entrée 42, un mélangeur 44 et un diffuseur 46 qui est en sortie de la pompe à jet.

En référence à la figure 2, la pompe à jet 4 est délimitée par un tube extérieur 40 et elle comprend un tube intérieur 50. Ce tube extérieur 40 comprend une portion convergente 41 au niveau de l'entrée 42 de la pompe, une portion intermédiaire 43 cylindrique au niveau du mélangeur 44, et une portion divergente 45 au niveau du diffuseur 46.

La pompe à jet 4 est sensiblement symétrique de révolution autour de son axe longitudinal X-X qui correspond à la direction amont-aval du système d'alimentation 2. L'axe longitudinal X-X correspond à la direction de l'axe longitudinal du tube extérieur 40 et à celle de la direction de l'axe longitudinal du tube intérieur 50.

Dans la suite de l'exposé, on appelle direction axiale une direction parallèle à l'axe X-X du tube intérieur 50 et direction radiale une direction sensiblement orthogonale à l'axe X-X du tube intérieur 50.

L'entrée 42 de la pompe à jet comporte le conduit d'entrée 5 de fluide actif et le conduit d'entrée 47 de fluide passif qui est situé autour du conduit d'entrée 5 de fluide actif.

Le fluide actif et le fluide passif sont tous les deux du carburant circulant dans le système d'alimentation 2. Le fluide actif, qui arrive du nœud A de la boucle de retour 20, a une pression et/ou une vitesse plus importante que le fluide passif qui arrive directement de la pompe centrifuge 3.

Le mélangeur 44 est configuré pour mélanger le fluide actif et le fluide passif de manière à entrainer le fluide passif.

Le diffuseur 46 est destiné à homogénéiser la vitesse du mélange de fluide en sortie de la pompe à jet 4 et en direction de la pompe volumétrique 9.

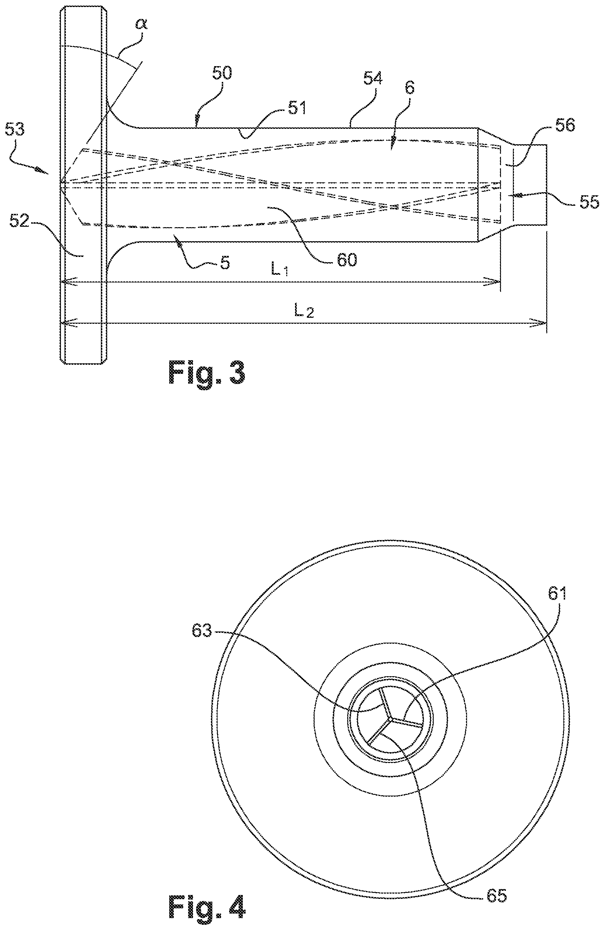

En référence aux figures 3 et 4, le conduit 5 de fluide actif comprend un disque de fixation 52, le tube intérieur 50 qui est rigidement solidaire du disque de fixation 52, et un dispositif de mise en rotation 6 du fluide actif qui est situé à l'intérieur du tube intérieur 50. Dans le mode de réalisation représenté, le conduit d'entrée de fluide actif 5 est monobloc.

Le conduit d'entrée de fluide actif 5 est fixé au niveau du disque 52 au tube extérieur 40.

Le tube intérieur 50 est délimité par une paroi 51 qui s'étend axialement depuis l'entrée 53 du tube jusqu'à la sortie 55 du tube. L'entrée 53 du tube débouche sur l'extérieur du conduit de fluide actif 5 au niveau du disque 52. La sortie 55 du tube débouche dans le mélangeur 44.

Le tube 50 comporte une partie cylindrique 54 et une partie convergente 56 située en aval de la partie cylindrique 54. La partie convergente 56 est destinée à augmenter la vitesse du fluide actif, avant que le fluide actif s'écoule dans le mélangeur 44.

La longueur de la partie cylindrique 54 représente la majorité de la longueur du tube intérieur 50. Dans le mode de réalisation représenté, la longueur du tube intérieur 50 est sensiblement égale à celle du conduit de fluide actif 5.

En référence conjointe aux figures 3, 5 et 6, le dispositif de mise en rotation du fluide actif 6 comprend trois aubes 60 vrillées qui sont de structure sensiblement identiques. Le dispositif de mise en rotation du fluide 6 est monobloc.

Les aubes 60 sont agencées autour de l'axe longitudinal X-X de la pompe à jet 4. Elles sont réparties uniformément le long de la direction circonférentielle du tube intérieur 50.

Chaque aube 60 présente une longueur L₁ selon la direction axiale qui est sensiblement égale à la longueur du tube intérieur 50. La longueur L₁ de chaque aube 60 selon la direction axiale est supérieure à la majorité de la longueur L₂ du conduit de fluide actif 5.

Chaque aube 60 présente une épaisseur moyenne qui est comprise entre 5% et 10% du diamètre intérieur du tube 50.

Chaque aube 60 comprend un élément de paroi 62. L'élément de paroi 62 est délimité par un bord latéral interne BI, un bord latéral externe BE opposé au bord latéral interne BI, un bord d'attaque BA et un bord de fuite BF opposé au bord d'attaque BA.

Le bord latéral interne BI et le bord latéral externe BF de chaque aube 60 sont opposés radialement l'un de l'autre. Le bord d'attaque BA et le bord de fuite BF de chaque aube 60 sont opposés axialement l'un de l'autre, en délimitant les extrémités latérales de l'aube 60. Le bord latéral interne BI et le bord latéral externe BE relient chacun entre le bord d'attaque BA au bord de fuite BF.

Les éléments de paroi 62 des aubes sont tous vrillés dans un même sens. L'élément de paroi 62 de la première aube 61 est vrillé autour d'un axe longitudinal X₁-X₁ de cette aube 61 qui est sensiblement parallèle à l'axe X-X du tube. De même, l'élément de paroi 62 de la deuxième aube 63 est vrillé autour d'un axe longitudinal de cette aube 63 qui est sensiblement parallèle à l'axe X-X du tube. L'élément de paroi 62 de la troisième aube 65 est également vrillé autour d'un axe longitudinal X₃-X₃ de cette aube 65 qui est sensiblement parallèle à l'axe X-X du tube.

Chaque aube 60 est vrillée selon un angle de vrillage β entre ses deux extrémités axiales opposées, de manière à ce que la somme des angles de vrillage β des aubes soit égale à 360°. Autrement dit, le dispositif de mise en rotation du fluide 6 parcourt toute la circonférence du tube 50 entre les extrémités axiales du dispositif de mise en rotation du fluide actif 6.

Même en cas de décollement du fluide actif des parois des aubes 60, tout le fluide actif entrant dans le tube intérieur 50 est alors susceptible d'être mis en rotation par le dispositif de mise en rotation 6.

Dans le mode de réalisation représenté, les angles de vrillage β des aubes 60 sont deux à deux identiques.

La première aube 61, la deuxième aube 62 et la troisième aube 63 sont reliées entre elles au niveau de leur bord latéral interne BI qui est sensiblement parallèle à l'axe longitudinal X-X du tube 50 et qui s'étend au centre du tube intérieur 50.

Le bord latéral externe BE de chaque aube 60 est solidarisé rigidement à la surface interne de la paroi 51 du tube intérieur 50.

Le bord d'attaque BA de chacune des aubes 60 a une forme de profil aérodynamique symétrique, afin de limiter les pertes de charge du fluide actif. Plus précisément, le bord d'attaque BA de chaque aube 60 a un profil aérodynamique similaire à pour les ailes d'avions développés par le Comité consultatif national pour l'aéronautique , dit NACA. Un tel profil est appelé profil de type NACA, dans le présent document.

Le bord d'attaque BA de chaque aube 60 est incliné d'un angle d'attaque α compris entre 5° et 30° par rapport à la section transversale du tube intérieur 50 au niveau de son entrée 53. L'angle d'attaque α permet de limiter les tourbillons du fluide actif en entrée du tube intérieur 50.

Le bord de fuite BF de chaque aube 60 comprend selon la direction radiale de l'aube 60 une portion interne 67 de bord de fuite et une portion externe 69 de bord de fuite. La portion interne de bord de fuite 67 a une forme de profil aérodynamique symétrique, de type NACA, afin de limiter le décollement du fluide actif de l'élément de paroi 62.

La portion externe 69 de bord de fuite a une surface extérieure sensiblement plane et qui est sensiblement orthogonale à la surface latérale de l'élément de paroi 62. Le profil sensiblement droit de la portion externe 69 de bord de fuite vise à créer des tourbillons dans cette zone, de manière à créer des instabilités de type Kevin Helmholtz. Ces instabilités favorisent le mélange du fluide actif et du fluide passif dans la pompe à jet 4, et donc le rendement de la pompe à jet 4.

Le rapport de la longueur de la portion interne 67 par rapport à la longueur totale du bord de fuite BF est compris entre 50% et 80% de la longueur du bord de fuite.

Le dispositif de mise en rotation 6 est réalisé par fabrication additive, par exemple par fusion de poudre métallique au laser, afin de réaliser chaque aube 60 avec une faible épaisseur.

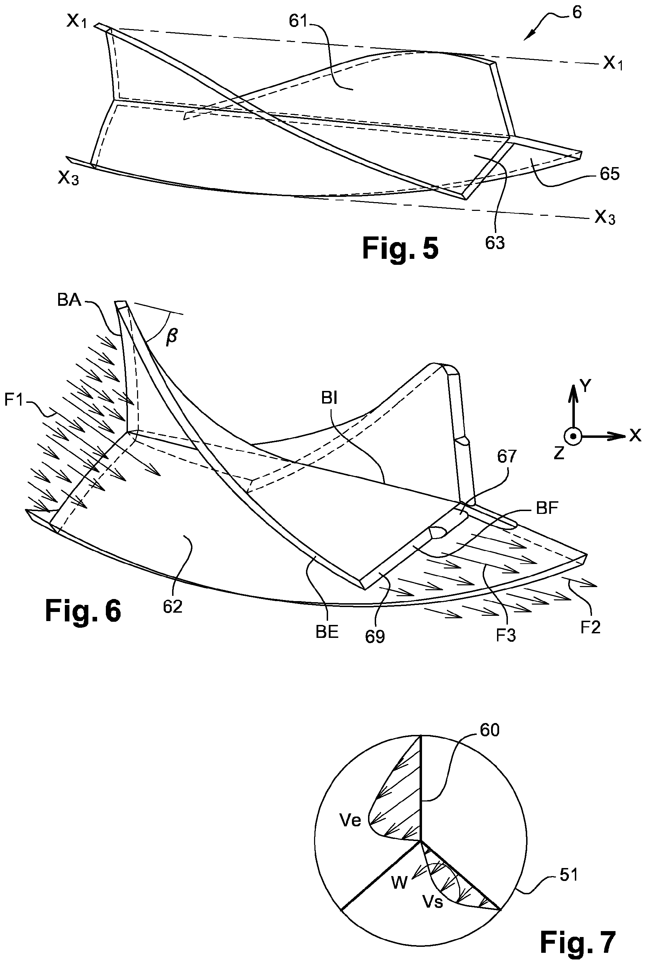

L'écoulement du fluide actif dans le conduit d'entrée de fluide actif de la pompe à jet 4 est décrit en référence aux figures 6 et 7.

Le flot de fluide actif F1 en entrée du tube intérieur 50 s'écoule dans ce tube selon une direction sensiblement parallèle à l'axe X-X du tube et avec une vitesse d'entrée Vₑ.

Le flot passif se déplace selon une direction sensiblement axiale autour du tube intérieur 50 et à l'intérieur du tube extérieur 40.

Dans le tube intérieur 50, le flot actif est entraîné en giration autour de l'axe du tube par les aubes 60, de manière à sortir du tube intérieur 50 selon un flux général F2 avec une vitesse Vₛ selon la direction axiale qui est légèrement inférieure à la vitesse d'entrée Vₑ, et avec une vitesse de rotation ω autour de l'axe longitudinal X-X du tube intérieur 50.

Une partie F3 du flot de fluide actif en sortie du tube intérieur 50 débouche du dispositif de mise en rotation 6 au niveau de la portion externe 69 de bord de fuite. Ce flot F3 de fluide actif forme des tourbillonnements locaux à cet endroit, ce qui génère des instabilités de type Kevin-Helmholtz qui favorisent le mélange du fluide actif et du fluide passif dans le mélangeur 44.

Le flot F2, F3 de fluide actif qui sort du tube intérieur 50 et le flot de fluide passif autour du tube intérieur 50 s'écoulent ensuite dans le mélangeur 44 où ils se mélangent, de manière à ce que le fluide actif entraine le fluide passif.

Enfin, la vitesse du mélange de fluide est homogénéisée lorsque ce mélange de fluide traverse le diffuseur 46, en direction de la pompe volumétrique 9.

Le dispositif de mise en rotation du fluide actif 6 permet d'entraîner le fluide actif en rotation autour de l'axe X-X du tube intérieur par rapport au tube intérieur 50. Il en découle un meilleur mélange du fluide actif et du fluide passif dans le mélangeur 44 et une augmentation du rendement de la pompe à jet 4.

Bien entendu, diverses modifications peuvent être apportées par l'homme du métier à l'invention qui vient d'être décrite sans sortir du cadre de l'exposé de l'invention.

En variante ou en plus, le système d'alimentation 2 comprend une résistance hydraulique comprenant un échangeur, un filtre, une vanne de coupure et /ou un débitmètre, entre la pompe volumétrique 9 et le doseur 11.

En variante, la pompe volumétrique 9 est une pompe volumétrique électrique, ce qui permet de supprimer le doseur 11 régulant le débit de carburant en direction des injecteurs 12 et la boucle de recirculation 20. La pompe volumétrique 9 est alors commandée par le système électronique de régulation à pleine autorité de la turbomachine, également connu sous le nom de calculateur « FADEC » ou « Full Authority Digital Engine Control ».

En variante, le conduit de fluide actif 5 est situé autour du conduit de fluide passif 47.

Par ailleurs, l'axe longitudinal du tube intérieur 50 est susceptible d'être incliné par rapport à l'axe longitudinal X-X de la pompe à jet 4.

En variante, le dispositif de mise en rotation 6 comprend une, deux aubes 60 ou plus de trois aubes 60 reliées les unes aux autres au niveau de leur bord latéral interne BI.

Les angles de vrillage β des aubes 61, 63, 65 sont susceptibles d'être distincts. Par ailleurs, il est possible qu'au moins une des aubes 61, 63, 65 ne soit pas vrillée.

Par ailleurs, les aubes 60 sont susceptibles d'être réparties non uniformément autour de l'axe X-X du tube intérieur 50.

## Revendications

1. Pompe à jet (4) pour système d'alimentation (2) en fluide de turbomachine, comprenant :
un conduit d'entrée de fluide actif (5) comprenant un tube (50), s'étendant suivant un axe longitudinal (X-X), et délimitant le conduit d'entrée (5),
un conduit d'entrée de fluide passif (47) séparé fluidiquement du conduit d'entrée de fluide actif (5) par le tube (50),
le conduit d'entrée de fluide actif (5) comprenant au moins deux aubes (60) vrillées situées à l'intérieur du tube (50) et configurées pour entrainer le fluide actif en rotation par rapport à l'axe longitudinal (X-X) du tube,
chacune des aubes (60) comprenant un élément de paroi (62) qui comporte un bord latéral interne (BI) et un bord latéral externe (BE) opposé au bord latéral interne (BI), **caractérisé en ce que** les aubes (60) étant reliées entre elles au niveau de leur bord latéral interne (BI) qui est sensiblement parallèle à l'axe longitudinal (X-X) du tube et qui s'étend au centre du tube intérieur (50).

2. Pompe à jet (4) selon la revendication précédente, dans laquelle au moins une partie du bord de fuite (BF) d'au moins une des aubes (60) comprend une surface extérieure sensiblement plane, de préférence sensiblement orthogonale à l'axe longitudinal (X-X) du tube.

3. Pompe à jet (4) selon l'une quelconque des revendications précédentes, dans laquelle au moins une portion interne (67) du bord de fuite (BF) d'au moins une des aubes (60) comprend un profil aérodynamique de type NACA.

4. Pompe à jet (4) selon l'une quelconque des revendications précédentes, dans laquelle au moins une partie du bord d'attaque (BA) d'au moins une des aubes (60) comprend un profil aérodynamique de type NACA.

5. Pompe à jet (4) selon l'une quelconque des revendications précédentes, dans laquelle le bord d'attaque (BA) d'au moins une des aubes (60) est incliné d'un angle d'attaque (α) compris entre 5° et 30° par rapport à une section transversale du tube intérieur (50) au niveau de l'entrée (53) du tube.

6. Pompe à jet (4) selon l'une quelconque des revendications précédentes, dans laquelle l'aube (60) s'étend, selon la direction de l'axe longitudinal (X-X) du tube, sur une longueur (L₁) supérieure à la majorité de la longueur (L₂) du conduit d'entrée de fluide actif (5), de préférence sur une longueur (L₁) supérieure aux deux tiers de la longueur (L₂) du conduit d'entrée de fluide actif (5).

7. Pompe à jet (4) selon l'une quelconque des revendications précédentes, comprenant au moins trois aubes vrillées (60,61,63, 65), agencées autour de l'axe (X-X) du tube et situées chacune à l'intérieur du tube (50), en étant configurées pour entrainer le fluide actif en rotation par rapport à l'axe (X-X) du tube.

8. Pompe à jet (4) selon la revendication précédente, dans laquelle les aubes (60, 61, 63, 65) sont toutes vrillées dans un même sens.

9. Pompe à jet (4) selon la revendication précédente, dans laquelle chaque aube (60, 61, 63, 65) est vrillée selon un angle de vrillage (β) entre les deux extrémités opposées (BA, BF) de l'aube selon la direction de l'axe (X-X) du tube, la somme des angles de vrillage (β) des aubes étant égale à 360°.

10. Système d'alimentation (2) en fluide pour turbomachine (1), comprenant :
une pompe à jet (4) selon l'une quelconque des revendications précédentes,
une pompe volumétrique haute pression (9) configurée pour être alimentée en fluide par la pompe à jet (4),
un doseur (11) de fluide, la pompe volumétrique (9) étant située entre la pompe à jet (4) et le doseur (11), et
une boucle de retour (20) de fluide, ayant une entrée (F) située en aval de la pompe haute pression (9) et une sortie (A) configurée pour alimenter en fluide le conduit d'entrée de fluide actif (5) de la pompe à jet (4),
le doseur (11) de fluide étant configuré pour réguler un débit de fluide dans la boucle de retour (20).

11. Système d'alimentation (2) selon la revendication précédente, comprenant un échangeur de chaleur (7) et/ou un filtre, en aval de la pompe à jet (4) et entre la pompe à jet (4) et le doseur (11).

12. Système d'alimentation (2) selon l'une quelconque des revendications 10 et 11, comprenant une pompe centrifuge basse pression (3) en amont de la pompe à jet (4) pour alimenter en fluide le conduit d'entrée de fluide passif de la pompe à jet (4).

13. Turbomachine (1) comprenant un système d'alimentation (2) en fluide, selon la revendication précédente.

## Patentansprüche

1. Strahlpumpe (4) für das Flüssigkeits-Zuführsystem (2) einer Turbomaschine, die Folgendes umfasst:
einen Aktivflüssigkeits-Einlasskanal (5) mit einem Rohr (50), das entlang einer Längsachse (X-X) verläuft und den Einlasskanal (5) begrenzt,
einen Passivflüssigkeits-Einlasskanal (47), der durch das Rohr (50) vom Aktivflüssigkeits-Einlasskanal (5) fluidisch getrennt ist,
wobei der Aktivflüssigkeits-Einlasskanal (5) mindestens zwei verdrehte Schaufeln (60) umfasst, die sich im Inneren des Rohrs (50) befinden und so konfiguriert sind, dass sie die aktive Flüssigkeit entlang der Längsachse (X-X) des Rohrs in Rotation versetzen,
wobei jede Schaufel (60) ein Wandelement (62) umfasst, das einen inneren Seitenrand (BI) und einen dem inneren Seitenrand (BI) gegenüberliegenden äußeren Seitenrand (BE) aufweist, **dadurch gekennzeichnet, dass** die Schaufeln (60) an ihrem inneren Seitenrand (BI) miteinander verbunden sind, welcher im Wesentlichen parallel zur Längsachse (X-X) des Rohrs ausgerichtet ist und durch die Mitte des Innenrohrs (50) verläuft.

2. Strahlpumpe (4) gemäß dem vorstehenden Anspruch, bei der zumindest ein Teil der Hinterkante (BF) mindestens einer der Schaufeln (60) eine im Wesentlichen flache Außenfläche umfasst, welche vorzugsweise im Wesentlichen orthogonal zur Längsachse (X-X) des Rohrs verläuft.

3. Strahlpumpe (4) gemäß einem der vorstehenden Ansprüche, bei der zumindest ein Innenabschnitt (67) der Hinterkante (BF) mindestens einer der Schaufeln (60) ein aerodynamisches NACA-Profil aufweist.

4. Strahlpumpe (4) gemäß einem der vorstehenden Ansprüche, bei der zumindest ein Teil der Vorderkante (BA) mindestens einer der Schaufeln (60) ein aerodynamisches NACA-Profil aufweist.

5. Strahlpumpe (4) gemäß einem der vorstehenden Ansprüche, bei der die Vorderkante (BA) mindestens einer der Schaufeln (60) mit einem Anstellwinkel (α) zwischen 5° und 30° gegen einen Querschnitt des Innenrohrs (50) im Bereich des Rohreingangs (53) geneigt ist.

6. Strahlpumpe (4) gemäß einem der vorstehenden Ansprüche, bei der sich die Schaufel (60) in Richtung der Längsachse (X-X) des Rohrs über eine Länge (L₁) erstreckt, die größer ist als die Hälfte der Länge (L₂) des Aktivflüssigkeits-Einlasskanals (5), und vorzugsweise über eine Länge (L₁), die größer ist als zwei Drittel der Länge (L₂) des Aktivflüssigkeits-Einlasskanals (5).

7. Strahlpumpe (4) gemäß einem der vorstehenden Ansprüche, die mindestens drei verdrehte Schaufeln (60, 61, 63, 65) umfasst, die um die Achse (X-X) des Rohrs angeordnet sind und die sich alle im Inneren des Rohrs (50) befinden und so ausgerichtet sind, dass sie die aktive Flüssigkeit entlang der Längsachse (X-X) des Rohrs in Rotation versetzen.

8. Strahlpumpe (4) gemäß dem vorstehenden Anspruch, bei der die Schaufeln (60, 61, 63, 65) alle in die gleiche Richtung verdreht sind.

9. Strahlpumpe (4) gemäß dem vorstehenden Anspruch, bei der alle Schaufeln (60, 61, 63, 65) mit einem Verdrehwinkel (β) zwischen den beiden gegenüberliegenden Kanten (BA, BF) der Schaufel in Bezug auf die Ausrichtung der Achse (X-X) des Rohrs verdreht sind, wobei die Summe der Verdrehwinkel (β) der Schaufeln 360° ergibt.

10. Flüssigkeits-Zuführsystem (2) einer Turbomaschine (1), das Folgendes umfasst:
eine Strahlpumpe (4) gemäß einem der vorstehenden Ansprüche,
eine Hochdruck-Verdrängerpumpe (9), die so konfiguriert ist, dass sie von der Strahlpumpe (4) mit Flüssigkeit gespeist wird,
eine Flüssigkeits-Dosiereinheit (11), bei der sich die Verdrängerpumpe (9) zwischen der Strahlpumpe (4) und der Dosiereinheit (11) befindet, und
einen Flüssigkeits-Rückführkreis (20), dessen Eingang (F) der Hochdruckpumpe (9) nachgelagert ist und dessen Ausgang (A) so konfiguriert ist, dass er den Aktivflüssigkeits-Einlasskanal (5) der Strahlpumpe (4) mit Flüssigkeit speist,
wobei die Flüssigkeits-Dosiereinheit (11) so konfiguriert ist, dass sie den Flüssigkeitsdurchsatz im Rückführkreis (20) reguliert.

11. Zuführsystem (2) gemäß dem vorstehenden Anspruch, das der Strahlpumpe (4) nachgelagert und zwischen der Strahlpumpe (4) und der Dosiereinheit (11) einen Wärmetauscher (7) und/oder einen Filter umfasst.

12. Zuführsystem (2) gemäß einem der vorstehenden Ansprüche 10 und 11, das eine der Strahlpumpe (4) vorgelagerte Niederdruck-Zentrifugalpumpe (3) umfasst, um den Passivflüssigkeits-Einlasskanal der Strahlpumpe (4) mit Flüssigkeit zu speisen.

13. Turbomaschine (1), die ein Flüssigkeits-Zuführsystem (2) gemäß dem vorstehenden Anspruch umfasst.

## Claims

1. A jet pump (4) for a fluid supply system (2) of a turbomachine, comprising:
an active fluid inlet conduit (5) comprising a tube (50), extending along a longitudinal axis (X-X), and delimiting the inlet conduit (5),
a passive fluid inlet conduit (47) fluidly separated from the active fluid inlet conduit (5) by the tube (50),
wherein the active fluid inlet conduit (5) comprises at least two twisted vanes (60) located inside the tube (50) and configured to rotatably drive the active fluid with respect to the longitudinal axis (X-X) of the tube,
each of the vanes (60) comprising a wall element (62) which includes an inner side edge (BI) and an outer side edge (BE) opposite to the inner side edge (BI), **characterized in that** the vanes (60) are connected to each other at their inner side edge (BI) which is substantially parallel to the longitudinal axis (X-X) of the tube and which extends in the centre of the internal tube (50).

2. The jet pump (4) according to the preceding claim, wherein at least one part of the trailing edge (BF) of at least one of the vanes (60) comprises a substantially planar external surface, preferably substantially orthogonal to the longitudinal axis (X-X) of the tube.

3. The jet pump (4) according to any of the preceding claims, wherein at least one inner portion (67) of the trailing edge (BF) of at least one of the vanes (60) comprises a NACA type aerodynamic profile.

4. The jet pump (4) according to any of the preceding claims, wherein at least one part of the leading edge (BA) of at least one of the vanes (60) comprises a NACA type aerodynamic profile.

5. The jet pump (4) according to any of the preceding claims, wherein the leading edge (BA) of at least one of the vanes (60) is tilted by a leading angle (α) between 5° and 30° with respect to a transverse cross-section of the internal tube (50) at the inlet (53) of the tube.

6. The jet pump (4) according to any of the preceding claims, wherein the vane (60) extends, along the direction of the longitudinal axis (X-X) of the tube, over a length (L₁) higher than most of the length (L₂) of the active fluid inlet conduit (5), preferably over a length (L₁) higher than two thirds of the length (L₂) of the active fluid inlet conduit (5).

7. The jet pump (4) according to any of the preceding claims, comprising at least three twisted vanes (60, 61, 63, 65), arranged about the axis (X-X) of the tube and each located inside the tube (50), by being configured to rotatably drive the active fluid with respect to the axis (X-X) of the tube.

8. The jet pump (4) according to the preceding claim, wherein the vanes (60, 61, 63, 65) are all twisted in a same direction.

9. The jet pump (4) according to the preceding claim, wherein each vane (60, 61, 63, 65) is twisted at a twisting angle (β) between both opposite ends (BA, BF) of the vane along the direction of the axis (X-X) of the tube, the sum of the twisting angles (β) of the vanes being equal to 360°.

10. A fluid supply system (2) for a turbomachine (1), comprising:
a jet pump (4) according to any of the preceding claims,
a high pressure displacement pump (9) configured to be supplied with fluid by the jet pump (4),
a fluid flow control system (11), the displacement pump (9) being located between the jet pump (4) and the flow control system (11), and
a fluid feedback loop (20), having an inlet (F) located downstream of the high pressure pump (9) and an outlet (A) configured to supply the active fluid inlet conduit (5) of the jet pump (4) with fluid,
the fluid flow control system (11) being configured to regulate a fluid flow rate in the feedback loop (20).

11. The supply system (2) according to the preceding claim, comprising a heat exchanger (7) and/or a filter, downstream of the jet pump (4) and between the jet pump (4) and the flow control system (11).

12. The supply system (2) according to any of claims 10 and 11, comprising a low pressure centrifugal pump (3) upstream of the jet pump (4) to supply the passive fluid inlet conduit of the jet pump (4) with fluid.

13. A turbomachine (1) comprising a fluid supply system (2), according to the preceding claim.
